# EUROPEAN PATENT SPECIFICATION

(11) **EP 3 289 797 B1**
(45) Date of publication and mention of the grant of the patent: **12.06.2019**
(21) Application number: 15890871.5
(22) Date of filing: 27.04.2015
(51) Int. Cl.: H04W 28/02, H04W 92/12, H04L 12/823, H04W 88/08, H04W 88/12

(54) **LOAD BASED SIGNALING IN A COMMUNICATION NETWORK**
LASTABHÄNGIGE SIGNALISIERUNG IN EINEM KOMMUNIKATIONSNETZWERK
SIGNALISATION BASÉE SUR LA CHARGE DANS UN RÉSEAU DE COMMUNICATION

(43) Date of publication of application: 07.03.2018
(73) Proprietor: Telefonaktiebolaget LM Ericsson (publ), 164 83 Stockholm (SE)
(72) Inventor: ANDREI, Diana, 582 14 Linköping (SE); AXELSSON, Samuel, 589 33 Linköping (SE); JOHANSSON, Stefan, 587 52 Linköping (SE)
(74) Representative: Zacco Sweden AB
(86) International application number: PCT/SE2015/050473
(87) International publication number: WO 2016/175687

(56) References cited:
- EP-A1- 2 717 619
- EP-A1- 2 844 023
- WO-A1-2015/005842
- WO-A2-2014/042482
- NTT DOCOMO: "eNB triggered S1 Overload Status Signalling", 3GPP DRAFT; R3-082586 ENB S1 OVERLOAD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050323865, [retrieved on 2008-09-24]
- NTT DOCOMO: "CR on eNB triggered S1 Overload signalling", 3GPP DRAFT; R3-083272 CR ON ENB S1 OVERLOAD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081105, 5 November 2008 (2008-11-05), XP050324490, [retrieved on 2008-11-05]
- NTT DOCOMO: "eNodeB triggered MME control of overload", 3GPP DRAFT; S2-087641_ENB_TRIGGERED_OVERLOAD_CONTROL_D ISC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miami; 20081112, 12 November 2008 (2008-11-12), XP050332074, [retrieved on 2008-11-12]
- NTT DOCOMO: 'eNodeB triggered MME control of overload' 3GPP DRAFT; S2-087641; 12 November 2008, XP050332074
- NTT DOCOMO: 'CR on eNB triggered S1 Overload signalling' 3GPP DRAFT; R3-083272; 05 November 2008, XP050324490
- NTT DOCOMO: 'eNB triggered S1 Overload Status Signalling' 3GPP DRAFT; R3-082586; 24 September 2008, XP050323865

## Description

### TECHNICAL FIELD

The embodiments of the present invention relate to load based signaling in communication networks, and in particular to handling of signaling to radio access network nodes experiencing a high load situation.

### BACKGROUND

As the amount of data traffic and the need for connectivity grow, radio access nodes need to serve more and more wireless devices and handle more and more traffic in wireless communication networks. As a consequence, signaling needs towards the core network increase as well, implying an even higher load on radio access network (RAN) nodes. Thus, with such an increase in load, RAN nodes may more easily than before become overloaded.

Today, there are different ways to handle RAN node overload situations. For example, in an LTE network, when an eNB is being overloaded or is experiencing high load situations, the eNB may reject incoming signaling messages from an MME. In regard of the air interface, the eNB may reduce the rate of incoming traffic from UEs by applying a mechanism called Access Class Barring (ACB). ACB works in such a way that a certain fraction of the UEs are forbidden to access this eNB for a certain period of time.

NTT DOCOMO: "eNB triggered S1 Overload Status Signalling", 3GPP DRAFT; R3-082586, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. Prague, Czech Republic; 24 September 2008, describes a method of conveying overload status of an eNB to an MME and how an MME behaves when eNB experiences an overload status. The reference discloses two alternatives for conveying eNB overload status to MME as follows: (a) utilizing S1AP message which includes defining new procedures or re-using existing procedures to define lEs to show the overload status and (b) utilizing SCTP layer, where an SCTP endpoint is enabled to know the congestion condition (overload status) of its peer SCTP endpoint.

However, as realized by the inventors, at least the strategy of rejecting incoming signaling from the MME is associated with problems, which will be described in more detail below.

### SUMMARY

The proposed solution provides a method allowing a core network node, such as an MME, to handle incoming signaling in accordance with the capacity of a RAN network node, such as an eNB. This allows the core network node to avoid sending requests that will be rejected or discarded by the RAN node. This in turn reduces processing load and signaling load in the RAN node.

Knowledge in the core network node regarding the RAN node capacity to handle incoming signaling also allows the core network node to make more intelligent choices. In the case of paging messages, this allows the core network node to distinguish between a paging failure and the case where the RAN node discards the paging request due to lack of capacity to handle the paging request. This knowledge can be used by the core network node to better determine if the paging procedure should be spread to a larger area or not.

According to a first aspect, a method for supporting load based signaling is provided, which is to be performed by a network node in a communication network. The method comprises determining a load level, out of a set of predefined load levels, based on a current load of the network node, where each load level corresponds to an estimated capability of the network node to handle signaling from at least one network control node. The method further comprises indicating the determined load level to at least one network control node.

According to a second aspect, a method for load based signaling is provided, to be performed by a network control node in a communication network. The method comprises obtaining an indication from a network node of a load level of the network node out of a set of predefined load levels. The method further comprises applying a signaling handling scheme corresponding to the indicated load level, where the signaling handling scheme relates to signaling from the network control node to the network node.

According to a third aspect, a network node is provided, which is operable in a communication network. The network node is configured to determine a load level, out of a set of predefined load levels, based on a current load of the network node, where each load level corresponds to an estimated capability of the network node to handle signaling from at least one network control node. The network node is further configured to indicate the determined load level to at least one network control node.

According to a fourth aspect, a network control node is provided, which is operable in a communication network. The network control node is configured to obtain an indication from a network node of a load level of the network node out of a set of predefined load levels. The network control node is further configured to apply a signaling handling scheme corresponding to the indicated load level, where the signaling handling scheme relates to signaling from the network control node to the network node.

According to a fifth aspect, a computer program is provided, comprising instructions which, when executed on at least one processor, cause the at least one processor to carry out the method according to the first or second aspect above.

According to a sixth aspect, a carrier is provided, containing the computer program of the previous aspect, wherein the carrier is one of an electronic signal, optical signal, radio signal, or computer readable storage medium.

### BRIEF DESCRIPTION OF DRAWINGS

The foregoing and other objects, features, and advantages of the technology disclosed herein will be apparent from the following more particular description of embodiments as illustrated in the accompanying drawings. The drawings are not necessarily to scale, emphasis instead being placed upon illustrating the principles of the technology disclosed herein.
**Figure 1** is a schematic block diagram showing an exemplifying network in which different embodiments may be applied.
**Figures 2-3** are flowcharts illustrating exemplifying methods performed by a network node according to different embodiments.
**Figures 4-5** are flowcharts illustrating exemplifying methods performed by a network control node according to different embodiments.
**Figures 6-11** are signaling diagrams illustrating interaction between nodes in different situations according to different exemplifying embodiments.
**Figures 12a-12c** are schematic block diagrams illustrating different implementations of a network node according to exemplifying embodiments.
**Figures 13a-13c** are schematic block diagrams illustrating different implementations of an indexing server according to exemplifying embodiments.

### DETAILED DESCRIPTION

The solution described herein will mainly be described in a context of an LTE network, using LTE (E-UTRAN and EPC) terminology. However, the solution may also be applicable for radio access networks, such as e.g. UTRAN or GERAN.

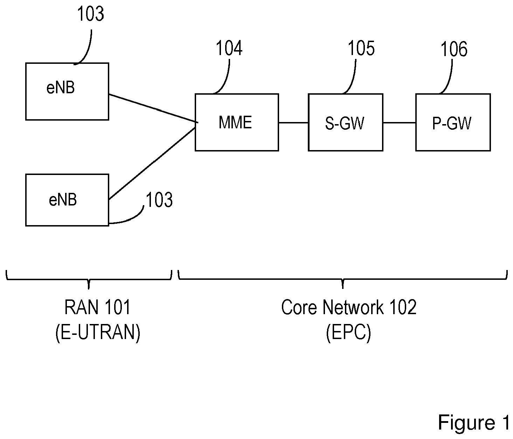

Figure 1 illustrates an exemplifying LTE network in which the herein suggested solution may be applied. Wireless communication networks are often described in terms of a Radio Access Network, RAN 101, and a Core network 102. In LTE these are denoted E-UTRAN and EPC. The E-UTRAN 101 comprises radio access nodes 103, which are denoted eNBs. The EPC 102 comprises core network nodes such as MME 104, S-GW 105 and P-GW 106.

As observed by the inventors, there is no way of informing the MME(s) in current LTE systems of that an eNB is experiencing a high load or an overload situation. Thus, there is no possibility to avoid that an MME attempts to add more load to an already overloaded eNB.

As realized by the inventors, the fact that there is no way to inform an MME of an eNB overload situation may cause problems. For example, the MME cannot distinguish rejections caused by an overload situation from individual failure cases, and as a consequence, the MME may make inadequate decisions. This will be described in more detail below.

In order to reduce its load, an eNB may reject incoming signaling messages from an MME, such as e.g. Paging or Handover Requests. However, before rejecting a message, the eNB spends processing power on decoding and analyzing the message which is to be rejected, which contributes to the already high load.

When an eNB discards Paging messages in an attempt to reduce its load, this will lead to paging failures also in cases where the UE actually is camping in the area served by the overloaded eNB. Such paging failures will most likely be (incorrectly) interpreted by the MME as that the UE is not located in that area. The paging will then be spread over a wider area, which will cause additional load in other parts of the radio network.

In the case of a Handover Request procedure, a rejection of a specific handover request can be signaled to the MME, but the eNB cannot indicate to the MME that it is unnecessary to send additional requests since they also will be rejected due to high load. Thus, the MME may continue to attempt to hand over UEs to the overloaded eNB

The solution described herein may solve the problems described above.

### Exemplifying embodiments

Below, exemplifying embodiments will be described.

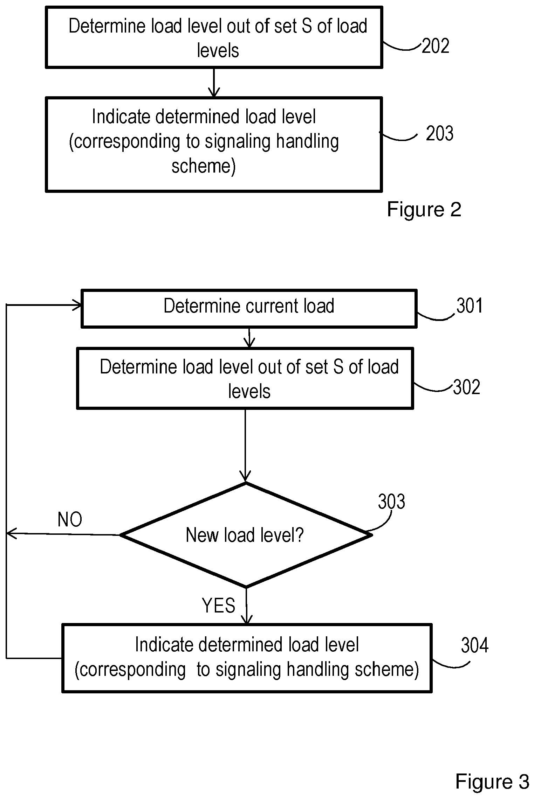

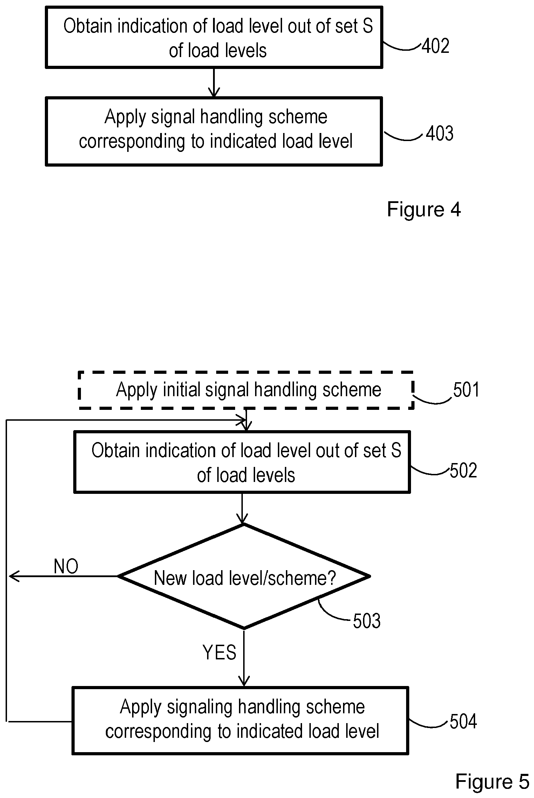

First, exemplifying method embodiments performed by a network node will be described with reference to figures 2-3. Then, further below, exemplifying method embodiment performed by a network control node will be described with reference to figures 4-5. The node denoted "network node" may be assumed to be a radio access network, RAN, node; and the node denoted "network control node" may be assumed to be a core network node.

Figure 2 illustrates a method performed by a network node operable in a communication network. The method is suitable for supporting load based signaling. The method comprises determining 202, based on a current load of the network node, a load level out of a set of predefined load levels. Each such load level corresponds to an estimated capability of the network node to handle incoming signaling, such as e.g. signaling requests, from at least one network control node. The method further comprises indicating 203 the determined load level to at least one network control node. By determining and indicating a current load level, the network node enables the at least one network control node to apply a signaling handling scheme towards the network node based on the indicated load level. Thereby, the network control node may make adequate decisions in regard of which messages that should be sent to the network node, and which should not. Alternatively, the network control node may more adequately interpret a rejection of incoming signaling, such as Paging requests or Handover requests.

In order for the network node to be able to determine a load level, the current load needs to be known or estimated. This could be performed in a number of different ways, which will be described further below. Further, the network node needs to have access to information on the set of predefined load levels, in order to be able to determine to which load level a current load corresponds, or belongs. Such information on the predefined load levels may be conveyed to the network node e.g. at setup, or, the network node could be configured with such information at some other occasion. The predefined load levels could also be updated, e.g. in attempts to fine tune the levels and the signaling handling schemes associated with the load levels.

It may be assumed that in most embodiments, there will be a corresponding signal handling scheme to each load level in the set of predefined load levels. If preferred, more than one load level could be associated with the same signal handling scheme, but in the examples herein it will be assumed that a load level corresponds to a signal handling scheme which matches the estimated capability of the network node when being in or at the load level in questions. In some embodiments, the network node does not need to be explicitly aware of the specific signaling handling schemes, only of a scheme of how to determine a load level out of a set, based on a current load. In other embodiments, the signaling handling scheme corresponding to a certain load level may be provided to the network control node by the network node. In the latter case, the provided signaling handling scheme may be a way of indicating the determined load level to the network control node.

A signal handling scheme may comprise a set of rules concerning which signals, such as messages, that could be sent to the network node, and also when such signals could be sent. A signal handling scheme may be regarded as a filter, which lets certain signals pass through and blocks transmission of certain other signals to the network node. For example, a signaling handling scheme may imply restrictions on which signals, such as messages or requests, that should be allowed to be transmitted to the network node from the at least one network control node. A signaling handling scheme may e.g. imply that at least some paging related messages or requests are not to be transmitted to the network node, and/or that at least some mobility related messages or requests are not to be transmitted to the network node.

The indicating of the determined load level may be performed in different ways. For example, the load level may be indicated in a message which is transmitted to the network control node. In case of an LTE network, such a message could be sent over the S1 interface e.g. in form of an S1AP message. The indication may be conveyed e.g. as a number of bits representing the determined load level. For example, each load level may be represented by an index that is conveyed in a message. The index may then, when received by the network control node be mapped to, or interpreted as, e.g. an index of a signaling control scheme, such as an entry in a list of signaling control schemes.

Further, the indicating of the determined load level may be performed at different occasions and/or intervals. One alternative is that the load level, e.g. after an initial indication, is indicated when there has been a change of load level. For example, when a newly determined load level differs from a previously determined load level, e.g. the preceding load level, the newly determined load level may be indicated to a network control node. Other alternatives are that the load level is indicated at regular intervals, and/or when being triggered by some other event. One event triggering such an indication could be e.g. turning on/off eNB equipment as part of an energy saving scheme

An exemplifying embodiment where the load level is indicated upon change is illustrated in figure 3. In figure 3, the determining 301 of a current load is illustrated, and a load level out of a set of load levels is determined based on the current load in an action 302. Then, it is determined 303 whether the determined load level differs from the previously determined load level or not. In an initial scenario, there might be no previously determined load level, or alternatively, there may be a default initializing load level. The initial case may be configured to be handled in different ways, which determines whether the first load level should be indicated to the network control node or not. Assuming that the determined load level differs from the previously determined load level (or an initial default level), the new load level is indicated 304 to a network control node. In this exemplifying embodiment, if the newly determined load level is the same as the last determined load level, it is not indicated. Then, a new current load may be determined 301, e.g. after a time period T. Such a time period T may differ, e.g. depending on a current load level. Thereby, a current load and/or a load level could e.g. be determined more often in overload situations, and more seldom in periods of low load.

The determining of a current load could be based on a number of different parameters related to the network node, such as a CPU load; a level of used resources, e.g. radio resources; a number of rejected requests; a state of buffers and/or a number of served wireless devices. The current load could be determined e.g. as a percentage of a maximum value related to the parameters stated above, or be measured in absolute values. The predefined load levels may be defined for different combinations of load related parameters. For example, one load level could be defined for 80% CPU load and 60% radio resource utilization, and another load level could be defined for 50% CPU load and 90% radio resource utilization. The predefined load levels may be determined or defined based on simulations of different traffic situations and/or on real data traffic, giving information on the capacity of the network node in different load situations. A current load may e.g. be monitored continuously, be determined at certain intervals, and/or be triggered by events, such as that a criteria related to load is fulfilled, that a new traffic situation occurs, and/or "on demand".

Below, corresponding method embodiments will be described from the perspective of a network control node. The network control node is operable in a communication network, and operable to have an interface towards a network node performing the method described above.

Figure 4 illustrates an exemplifying method embodiment to be performed by a network control node. The method comprises obtaining 402 an indication from a network node of a load level of the network node out of a set of predefined load levels. The method illustrated in figure 4 further comprises applying 403 a signaling handling scheme corresponding to the indicated load level, where the signaling handling scheme relates to signaling from the network control node to the network node.

The indication may be obtained e.g. by the receiving of a message over an interface between the network control node and the network node. In case the nodes are operating in an LTE system, the message may be an S1 message, such as an S1AP message on Layer-3. The indication could be conveyed e.g. as a number of bits representing an entry in a list or table of signaling handling schemes.

The network control node needs to have knowledge of how to interpret the indication obtained from the network node. The network control node may e.g. be configured with such information at setup, or at some other time, e.g. by an operation support system, OSS, or other network function. The network control node could be configured with a set, e.g. a list, of signal handling schemes, e.g. in form of sets of rules related to how to handle signaling towards a network node. There should be at least one signaling handling scheme implying a function which differs from a preferred operation at low load, i.e. that comprises restrictions in regard of signaling towards a network node. Each signaling handling scheme could correspond to a load level of a network control node. Alternatively, rules for a signaling handling scheme could be provided with the indication, or even constitute the indication. As previously mentioned, more than one load level could be associated with the same signaling handling scheme. The normal operation associated with a low load level could be defined as an implicit, or default, signaling handling scheme.

Figure 5 illustrates an exemplifying method embodiment to be performed by a network control node. In the illustrated embodiment, it is assumed that the network control node has been configured with an initial signaling handling scheme, which is applied until any obtained information indicates that it should be changed. Such an initial signaling handling scheme may e.g. assume a low load level on network nodes, and thus not imply any restrictions in regard e.g. of paging or mobility messages. When an indication is received 502 from a network node, it may be determined 503, whether the received indication implies a change of signaling handling scheme or not. This could be done e.g. by determining whether a received indication of a load level differs from a previously received indication of a load level, or by determining whether a signaling handling scheme corresponding to a received indication differs from a signaling handling scheme corresponding to a previously received indication. In case the indicated load level and/or signaling handling scheme differs from what was previously determined, or what is currently applied, a new signaling handling scheme should be applied 504. This new signal handling scheme may then be applied until an obtained 502 indication gives that the signaling handling scheme should be changed again, due to load changes at the network node. When an obtained indication does not imply that the signaling handling scheme should be changed, the already applied signaling handling scheme may be maintained. In embodiments where the indication is only received when there has been a change in load level (since it is only transmitted then by the network node), the determining may be considered done by the receiving of the indication.

In an LTE network, the network node may be assumed to be an eNB, and the network control node to be an MME. In an LTE network, the load level could be indicated e.g. in an S1 message, such as an S1AP message on Layer 3, where S1 is the name of an interface between an eNB and an MME. Further below, further exemplifying embodiments will be described using LTE terminology.

However, the solution may also be applicable in other networks, such as e.g. WCDMA or GSM networks. In these cases, the network node will be an RNC or a BNC, and the network control node will be a mobile switching center, MSC, or a Serving GPRS Support Node, SGSN. The load level could in the WCDMA case be indicated e.g. in a lu message, and in the GSM case in a so-called A or G message, where lu, A and G are names of interfaces in the respective systems.

According to exemplifying embodiments, an eNB will send an indication to the concerned MMEs whenever it (the eNB) enters a state where the load is such that only a limited amount of, or even no incoming S1 signaling can be handled. When the limitation of, or restriction on, incoming S1 signaling can be relaxed, completely removed, or needs to be increased, the eNB may send such an indication to the concerned MMEs, which may then apply an adequate signaling handling scheme. Several stages of "loaded eNB" state can be considered. Such stages may be denoted e.g. load levels, as above.

Each eNB load stage, or load level, can be associated with a different signaling handling scheme, e.g. in form of a set of rules for the MME regarding what and how many S1 messages that may be sent to the eNB when being in the load level in question. Such rules could be preconfigured and/or e.g. be included in a message sent by the eNB to the MME.

A separate new S1 message, denoted e.g. ENB Signaling Handling Indication, could be defined to be sent to the MME. Such an S1 message could be sent e.g. every time the eNB reaches a load level where new message sending rules are to be applied. It is assumed that the eNB is not in two load stages at the same time.

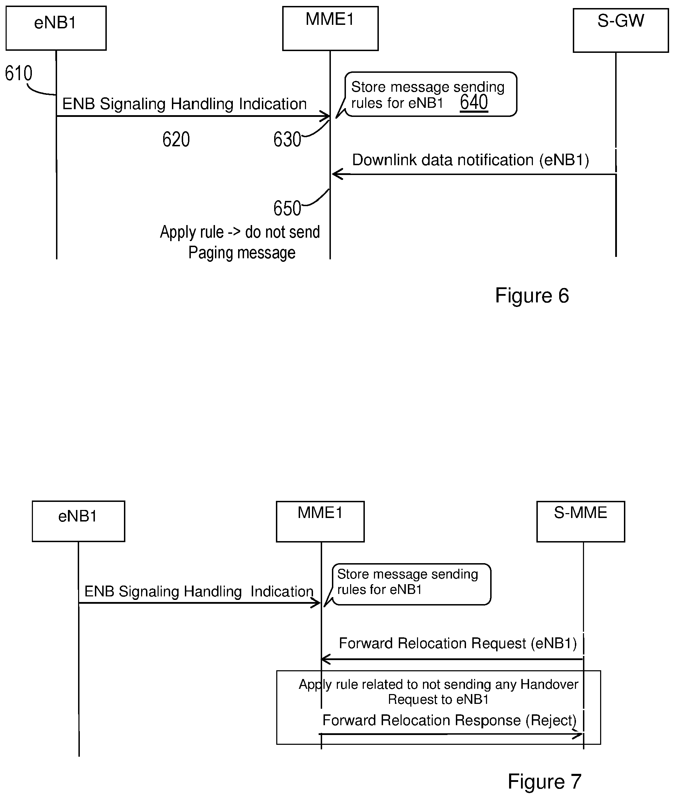

An exemplifying method is illustrated in figure 6, showing a sequence of actions performed by an eNB (eNB1) and an MME (MME1) when a new load level is entered and new message sending rules should be applied
- 610: eNB1 determines that it has entered a load level where new message sending rules apply.
- 620: eNB1 sends ENB Signaling Handling Indication messages to all connected MMEs (among others, to MME1)
- 630: MME1 receives the ENB Signaling Handling Indication message from eNB1
- 640: Receiving MME (MME1) stores the information about the rules applicable for the load level for the sender eNB (eNB1)
- 650: MME1 starts applying the rules defined for the given load level of eNB1 and thereby certain S1 messages will be sent to eNB1 and some S1 messages might not be sent.

### Message sending rule types

As previously mentioned, a signaling handling scheme could comprise or even consist of a set of rules. Examples of rule types considered for the solution described herein are given below. Rules for an MME to apply in relation to an eNB can range from e.g. "No restrictions" to "Block all". "No restrictions", meaning that all S1 messages are sent from the MME to the eNB in question. This would be the rules to apply e.g. when the eNB has determined that the load level is normal and that all incoming S1 messages thus can be handled. "Block all", on the other hand, implies restrictions on, or blocking of, all S1 messages stemming from procedures initiated outside the considered eNB.

In between these two extremes where all or nothing is allowed, other rules may be defined implying that some messages are sent while others are not. As previously mentioned, a common principle of all rules may be the providing of a filter function in regard of incoming messages concerning a certain eNB, based on the given rule set for that eNB at that point in time. A rule set associated with a load level or load stage may be denoted a signaling handling scheme.

Such a filter or filter function can be defined to consider e.g. certain attributes and/or fields that are defined for the different messages, such as, for example, priority value or cause value. Considering of a priority value may be applicable e.g. for a Paging message; for the bearers to be included in a handover or E-RAB setup message. Considering of a cause value may be applicable e.g. for a handover message, such that handover requests related to some causes for handover are allowed, and handover requests for other causes, such as e.g. load balancing, are not allowed. Alternatively or in addition, a randomization rule could be applied when deciding which messages that should be sent and which should not. Such a randomization rule may further reduce the number of messages sent to the eNB in question, by eliminating randomly selected messages.

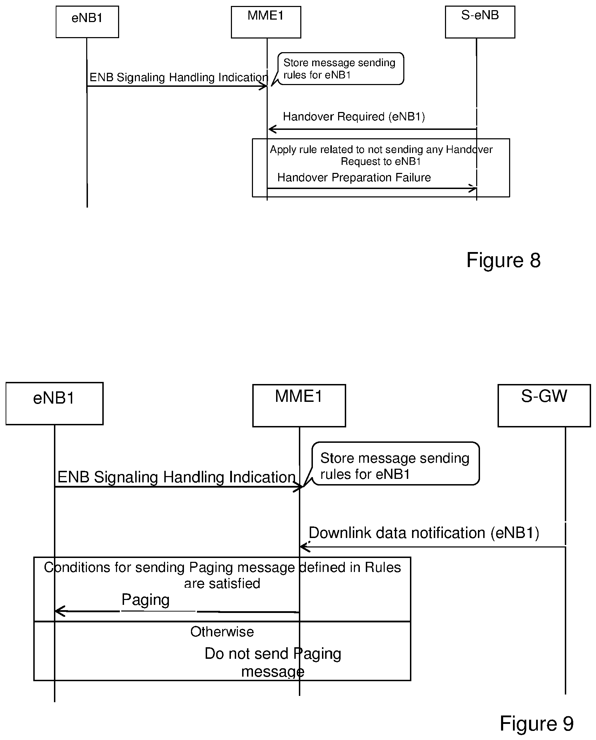

Some example embodiments comprising signaling handling schemes related to Paging and Handover messages will be described in different scenarios below with reference to figures 6-11.
- When an eNB has no capability to handle incoming S1 messages, such as Paging and Handover Requests, the eNB may send a Signaling Handling Indication message indicating or incorporating a rule set (scheme) stipulating that no such messages shall be sent by the MME to the considered eNB. This would correspond to the alternative "Block all" described above. The actions performed by the concerned nodes may be described as follows:eNB1 sends an ENB Signaling Handling Indication message according to steps 610 and 620 described in conjunction with figure 6. (These actions are also present in figures 7-11 for completeness). A rule set which is included in the message says that "No Paging and Handover messages shall be sent to eNB1".
- MME1 handles the ENB Signaling Handling Indication message as described in steps 630 and 640 described in conjunction with figure 2. (This step is also illustrated in figures 7-11 for completeness)
- MME1 receives a Downlink data notification message (paging request) from S-GW and applies the rule related to Paging message sending for eNB1: in this particular example, the rule is such that no Paging message shall be sent to eNB1. Therefore, no more actions are performed. See figure 6.
- MME1 receives a Forward Relocation Request message (handover request) from a source MME in a handover scenario where the MME is changed, and applies the rule related to Handover message sending for eNB1: in this particular example, the rule is such that no Handover Request message is sent to eNB1. Thus, MME1 will reply to the source MME with a Forward Relocation Response message containing a Reject result. See figure 7.
- MME1 receives a Handover Required message from a source eNB in a handover scenario where the MME is not changed, and applies the rule related to Handover message sending for eNB1: in this particular example, the rule is such that no Handover Request message is sent to eNB1. Thus, MME1 will reply to the source eNB with a Handover Preparation Failure message. See figure 8.

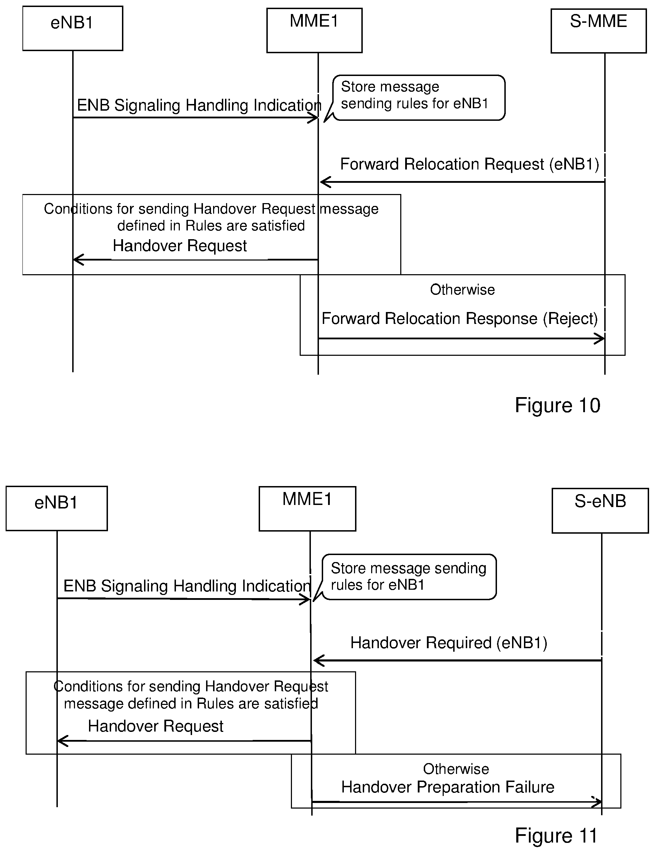

When an eNB has limited capability to handle some incoming S1 messages, such as Paging and Handover Request, the eNB may send a Signaling Handling Indication message incorporating a rule set (scheme) stipulating that some Paging and Handover messages can be sent to the concerned eNB. For example, the rule for Paging messages could be that only Paging messages with certain priority should be sent to the eNB, and for handover messages the rule can state that handovers that are related to load balancing should not be sent to the eNB. The actions performed by the concerned nodes in such a case according to exemplifying embodiments are illustrated in figures 9-11 may be described as follows:
- eNB1 sends an ENB Signaling Handling Indication message in accordance with the steps 610 and 620 as described in conjunction with figure 6. (These steps are also present in figures 7-11).The rule set included in the message says that "Some Paging and Handover messages shall be sent to eNB1"
- MME1 handles the ENB Signaling Handling Indication message as described for steps 630 and 640 in figure 6. (These steps are also present in figures 7-11)
- MME1 receives a Downlink data notification message from S-GW and applies the rule related to Paging message sending for eNB1: in this particular example, the rule is such that some Paging messages may be sent to eNB1 and some Paging messages may not be sent to eNB1. If the Downlink Data Notification message satisfies the conditions, described in the rule, for sending the Paging message to eNB1, a Paging message will be sent to eNB1. Otherwise, no Paging message is sent. See figure 9.
- MME1 receives a Forward Relocation Request message from a source MME, in a handover scenario where the MME is changed, and applies the rule related to Handover message sending for eNB1: in this particular example, the rule is such that some Handover Request messages may be sent to eNB1 and some Handover Request messages may not be sent to eNB1. If the Forward Relocation Request message satisfies the conditions, described in the rule, for sending the Handover Request message to eNB1, a Handover Request message will be sent to eNB1. Otherwise, MME1 replies to the source MME with a Forward Relocation Response message containing a Reject result. See figure 10.
- MME1 receives a Handover Required message from a source eNB, in an handover scenario where the MME is not changed, and applies the rule related to Handover message sending for eNB1: in this particular example, the rule is such that some Handover Request messages may be sent to eNB1 and some Handover Request messages may not be sent to eNB1. If the Handover Required message satisfies the conditions, described in the rule, for sending the Handover Request message to eNB1, a Handover Request message will be sent to eNB1. Otherwise, MME1 replies to the source eNB with a Handover Preparation Failure message. See figure 11.

### Hardware implementations

The methods and techniques described above may be implemented in network nodes. Above, in association with describing the method embodiments, it is exemplified in which nodes in an LTE system the methods are intended to be implemented. Corresponding nodes in other communication systems may be denoted differently.

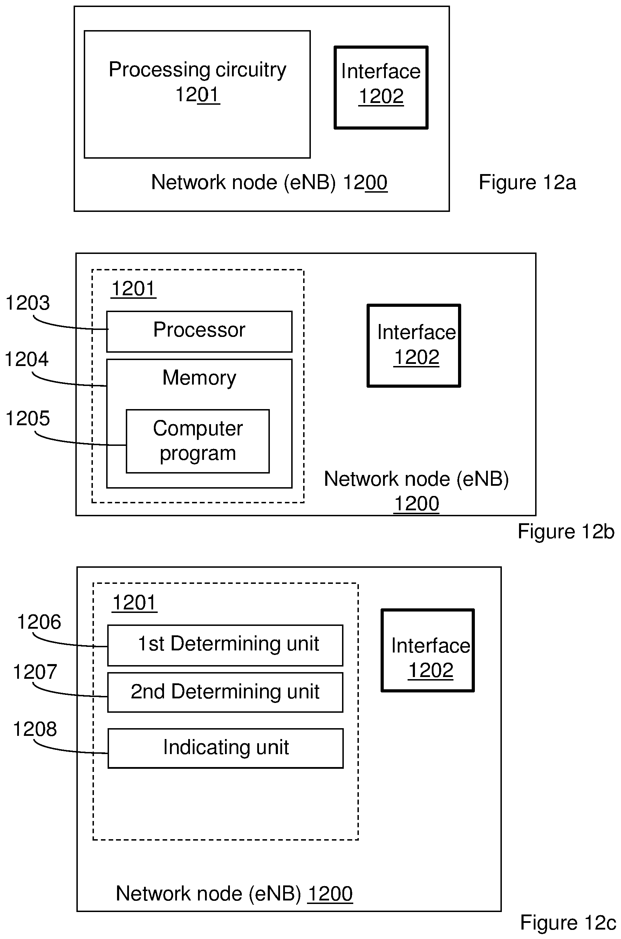

### Network node, figures 12a-12c

An exemplifying embodiment of a network node is illustrated in a general manner in figure 12a. The network node may, as previously described, be an eNB operable in an LTE type network. In order to more easily separate it from descriptions of a network control node herein, the network node will be denoted eNB below. The eNB 1200 is configured to perform at least one of the method embodiments described above with reference to any of figures 2-3 or 6-11. The eNB 1200 is associated with the same technical features, objects and advantages as the previously described method embodiments. The node will be described in brief in order to avoid unnecessary repetition.

The eNB may be implemented and/or described as follows:
The eNB 1200 is configured for supporting load based signaling. The eNB 1200 comprises processing circuitry 1201 and a communication interface 1202. The processing circuitry 1201 is configured to cause the eNB 1200 to determine, based on a current load of the eNB, a load level out of a set of predefined load levels, each load level corresponding to an estimated capability of the eNB to handle incoming signaling from at least one network control node such as an MME. The processing circuitry 1201 is further configured to cause the eNB to indicate the determined load level to at least one network control node/MME. The communication interface 1202, which may also be denoted e.g. Input/Output (I/O) interface, includes a network interface for sending data to and receiving data from other network nodes. The eNB is thereby configured for and operable to enable the at least one network control node to apply a signaling handling scheme towards the network node based on the indicated load level.

The processing circuitry 1201 could, as illustrated in figure 12b, comprise processing means, such as a processor 1203, e.g. a CPU, and a memory 1204 for storing or holding instructions. The memory would then comprise instructions, e.g. in form of a computer program 1205, which when executed by the processing means 1203 causes the eNB 1200 to perform the actions described above.

An alternative implementation of the processing circuitry 1201 is shown in figure 12c. The processing circuitry here comprises a determining unit 1207, configured to cause the eNB to determine, based on a current load of the network node, a load level out of a set of predefined load levels. The processing circuitry further comprises an indicating unit 1208, configured to cause the eNB to indicate the determined load level to at least one network control node. The processing circuitry could comprise more units, such as another determining unit 1206 for determining a current load of the eNB. This task could alternatively be assumed to be performed by one of the other units, e.g. the determining unit 1207.

The eNBs described above could be configured for the different method embodiments described herein, such as providing a rule set to the network control node/MME.

The eNB 1200 may be assumed to comprise further functionality, for carrying out regular node functions. These functions would be at least partly different depending on whether the network node is an eNB in an LTE network or a RAN node, such as an RNC, operating in another type of network.

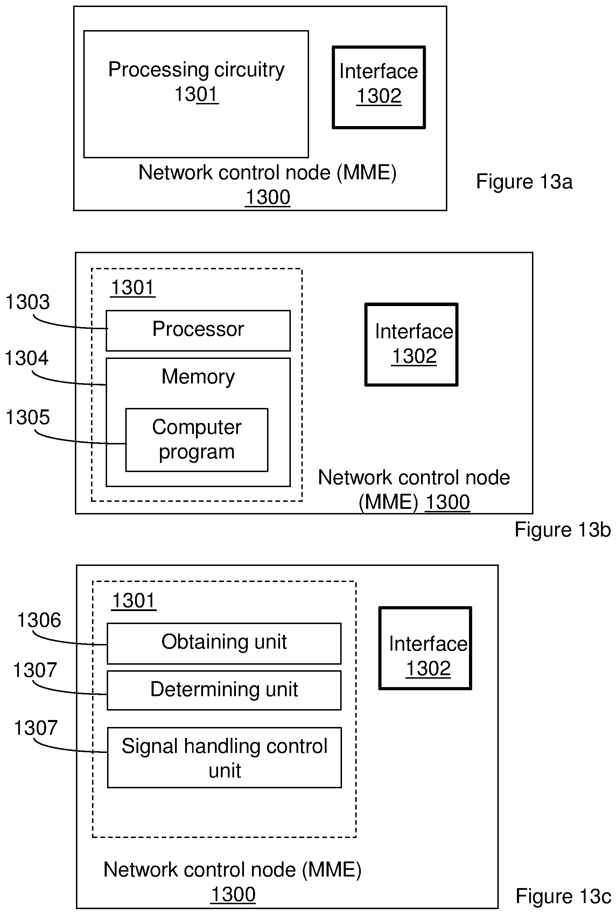

### Network control node, figures 13a-13c

Embodiments herein also relate to a network control node 1300 configured for load based signaling. An exemplifying embodiment of a network control node is illustrated in a general manner in figure 13a. The network control node 1300 is configured to perform at least one of the method embodiments described above with reference to any of figures 4-11. The network control node 1300 is associated with the same technical features, objects and advantages as the previously described method embodiments. The node will be described in brief in order to avoid unnecessary repetition. In an LTE network, the network control node would be an MME or another node or arrangement having corresponding functions.

The network control node 1300 is configured for load based signaling, and for being operable to communicate with a network node as described above. The network control node 1300 comprises processing circuitry 1301 and a communication interface 1302. The processing circuitry 1301 is configured to cause the network control node to obtain an indication from a network node, such as an eNB, of a load level of the network node out of a set of predefined load levels. The processing circuitry 1301 is further configured to cause the network control node to apply a signaling handling scheme corresponding to the indicated load level, where the signaling handling scheme relates to signaling from the network control node to the network node. The communication interface 1302, which may also be denoted e.g. Input/Output (I/O) interface, includes a network interface for sending data to and receiving data from other network nodes.

The processing circuitry 1301 could, as illustrated in figure 13b, comprise processing means, such as a processor 1303, and a memory 1304 for storing or holding instructions. The memory would then comprise instructions, e.g. in form of computer program 1305, which when executed by the processing means 1303 causes the network control node 1300 to perform the actions described above.

An alternative implementation of the processing circuitry 1301 is shown in figure 13c. The processing circuitry here comprises an indicating unit 1306, configured to cause the network control node to obtain an indication from a network node of a load level of the network node out of a set of predefined load levels. The processing circuitry further comprises a signaling handling control unit 1306, configured to cause the network control node to apply a signaling handling scheme, e.g. a set of rules, corresponding to the indicated load level.

The network control node 1300 may be assumed to comprise further functionality, for carrying out regular node functions.

### Concluding remarks

The steps, functions, procedures, modules, units and/or blocks described herein may be implemented in hardware using any conventional technology, such as discrete circuit or integrated circuit technology, including both general-purpose electronic circuitry and application-specific circuitry.

Particular examples include one or more suitably configured digital signal processors and other known electronic circuits, e.g. discrete logic gates interconnected to perform a specialized function, or Application Specific Integrated Circuits (ASICs).

Alternatively, at least some of the steps, functions, procedures, modules, units and/or blocks described above may be implemented in software such as a computer program for execution by suitable processing circuitry including one or more processing units. The software could be carried by a carrier, such as an electronic signal, an optical signal, a radio signal, or a computer readable storage medium before and/or during the use of the computer program in the network nodes. The network node and/or network control node described above may be implemented in a so-called cloud solution, referring to that the implementation may be distributed, and the network node and network control node therefore may be so-called virtual nodes or virtual machines.

The flow diagram or diagrams presented herein may be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

Examples of processing circuitry includes, but is not limited to, one or more microprocessors, one or more Digital Signal Processors, DSPs, one or more Central Processing Units, CPUs, and/or any suitable programmable logic circuitry such as one or more Field Programmable Gate Arrays, FPGAs, or one or more Programmable Logic Controllers, PLCs. That is, the units or modules in the arrangements in the different nodes described above could be implemented by a combination of analog and digital circuits, and/or one or more processors configured with software and/or firmware, e.g. stored in a memory. One or more of these processors, as well as the other digital hardware, may be included in a single application-specific integrated circuitry, ASIC, or several processors and various digital hardware may be distributed among several separate components, whether individually packaged or assembled into a system-on-a-chip, SoC.

It should also be understood that it may be possible to re-use the general processing capabilities of any conventional device or unit in which the proposed technology is implemented. It may also be possible to re-use existing software, e.g. by reprogramming of the existing software or by adding new software components.

The embodiments described above are merely given as examples, and it should be understood that the proposed technology is not limited thereto. It will be understood by those skilled in the art that various modifications, combinations and changes may be made to the embodiments without departing from the present scope. In particular, different part solutions in the different embodiments can be combined in other configurations, where technically possible.

It should be noted that although terminology from 3GPP LTE has been used in this disclosure to exemplify the invention, this should not be seen as limiting the scope of the invention to only the aforementioned system. Other wireless systems which support a broadcast service may also benefit from exploiting the ideas covered within this disclosure.

When using the word "comprise" or "comprising" it shall be interpreted as nonlimiting, i.e. meaning "consist at least of".

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts.

It is to be understood that the choice of interacting units, as well as the naming of the units within this disclosure are only for exemplifying purpose, and nodes suitable to execute any of the methods described above may be configured in a plurality of alternative ways in order to be able to execute the suggested procedure actions.

It should also be noted that the units described in this disclosure are to be regarded as logical entities and not with necessity as separate physical entities.

### ABBREVIATIONS

- eNB: Enhanced Node B
- LTE: Long term Evolution
- MME: Mobility Management Entity
- RAT: Radio Access Technology
- RAN: Radio Access Network
- RWR: RRC Connection Release with Redirection
- S-GW: Serving Gateway
- S-MME: Source MME
- S-eNB: Source eNB
- T-MME: Target MME

## Claims

1. A method for supporting load based signaling performed by a network node in a communication network, the method comprising:
- determining (202), based on a current load of the network node, a load level out of a set of predefined load levels, each load level corresponding to an estimated capability of the network node to handle signaling from at least one network control node; and
- indicating (203) the determined load level to at least one network control node, wherein indicating is performed when the determined load level differs from a previously determined load level, and wherein indicating the determined load level comprises transmitting the determined load level in a message to the network control node.

2. The method according to claim 1, wherein each load level of the set of predefined load levels corresponds to a respective signal handling scheme, wherein the signal handling scheme comprises a set of rules concerning which signals are to be sent to the network node and when such signals are to be sent to the network node.

3. The method according to claim 2, wherein at least one signal handling scheme implies restrictions on which signals should be transmitted to the network node.

4. The method according to any of claims 2 or 3, wherein at least one signal handling scheme implies that at least some paging related signals are not to be transmitted to the network node.

5. The method according to any of claims 2-4, wherein at least one signal handling scheme implies that at least some mobility related signals are not to be transmitted to the network node.

6. The method according to any of the preceding claims, wherein the load level is determined based on one or more of:
- CPU load;
- a level of used resources
- a number of rejected requests;
- a state of buffers;
- a number of served wireless devices.

7. A network node operable in a communication network, the network node being configured to:
- determine, based on a current load of the network node, a load level out of a set of predefined load levels, each load level corresponding to an estimated capability of the network node to handle signaling from at least one network control node; and to indicate the determined load level to at least one network control node, wherein the determined load level is indicated when the determined load level differs from a previously determined load level, and wherein the determined load level is indicated by transmitting the determined load level in a message to the network control node.

8. The network node according to claim 7, wherein each load level of the set of predefined load levels corresponds to a respective signal handling scheme, wherein the signal handling scheme is a set of rules concerning which signals and when such signals are to be sent to the network node.

9. The network node according to claim 8, wherein at least one signal handling scheme implies restrictions on which signals should be transmitted to the network node.

10. A computer program, comprising instructions which, when executed on at least one processor, cause the at least one processor to carry out the method according to any of claims 1-6.

11. A carrier comprising a computer program of claim 10, wherein the carrier is one of an electronic signal, optical signal, radio signal, or computer readable storage medium.

## Patentansprüche

1. Verfahren zum Unterstützen von lastabhängiger Signalisierung, durchgeführt durch einen Netzknoten in einem Kommunikationsnetz, wobei das Verfahren umfasst:
- Bestimmen (202), basierend auf einer aktuellen Last des Netzknotens, eines Lastpegels aus einem Satz vordefinierter Lastpegel, wobei jeder Lastpegel einer geschätzten Fähigkeit des Netzknotens entspricht, eine Signalisierung von mindestens einem Netzsteuerknoten zu handhaben; und
- Angeben (203) des bestimmten Lastpegels mindestens einem Netzsteuerknoten, wobei das Angeben durchgeführt wird, wenn sich der bestimmte Lastpegel von einem zuvor bestimmten Lastpegel unterscheidet, und wobei das Angeben des ermittelten Lastpegels das Übertragen des bestimmten Lastpegels an den Netzsteuerknoten umfasst.

2. Verfahren nach Anspruch 1, wobei jeder Lastpegel aus dem Satz vordefinierter Lastpegel einem jeweiligen Signalhandhabungsschema entspricht, wobei das Signalhandhabungsschema einen Satz von Regeln in Bezug darauf umfasst, welche Signale an den Netzknoten zu senden sind und wann diese Signale an den Netzknoten zu senden sind.

3. Verfahren nach Anspruch 2, wobei mindestens ein Signalhandhabungsschema Einschränkungen in Bezug darauf impliziert, welche Signale an den Netzknoten übertragen werden sollten.

4. Verfahren nach einem der Ansprüche 2 oder 3, wobei mindestens ein Signalhandhabungsschema impliziert, dass mindestens einige Paging-bezogene Signale nicht an den Netzknoten zu übertragen sind.

5. Verfahren nach einem der Ansprüche 2 bis 4, wobei mindestens ein Signalhandhabungsschema impliziert, dass mindestens einige mobilitätsbezogene Signale nicht an den Netzknoten zu übertragen sind.

6. Verfahren nach einem der vorstehenden Ansprüche, wobei der Lastpegel auf der Grundlage eines oder mehrerer von Folgendem ermittelt wird:
- CPU-Last;
- ein Maß von verwendeten Ressourcen
- ein Anzahl von zurückgewiesenen Anforderungen;
- ein Zustand der Puffer;
- eine Anzahl von bedienten drahtlosen Vorrichtungen.

7. Netzknoten, der in einem Kommunikationsnetz betreibbar ist, wobei der Netzknoten konfiguriert ist zum:
- Bestimmen, basierend auf einer aktuellen Last des Netzknotens, eines Lastpegels aus einem Satz vordefinierter Lastpegel, wobei jeder Lastpegel einer geschätzten Fähigkeit des Netzknotens entspricht, eine Signalisierung von mindestens einem Netzsteuerknoten zu handhaben; und Angeben des bestimmten Lastpegels mindestens einem Netzsteuerknoten, wobei der bestimmte Lastpegel angegeben wird, wenn sich der bestimmte Lastpegel von einem zuvor bestimmten Lastpegel unterscheidet, und der bestimmte Lastpegel durch das Übertragen des bestimmten Lastpegels in einer Nachricht an den Netzsteuerknoten angegeben wird.

8. Netzknoten nach Anspruch 7, wobei jeder Lastpegel aus dem Satz vordefinierter Lastpegel einem jeweiligen Signalhandhabungsschema entspricht, wobei das Signalhandhabungsschema ein Satz von Regeln in Bezug darauf ist, welche Signale und wann diese Signale an den Netzknoten zu senden sind.

9. Netzknoten nach Anspruch 8, wobei mindestens ein Signalhandhabungsschema Einschränkungen in Bezug darauf impliziert, welche Signale an den Netzknoten übertragen werden sollten.

10. Computerprogramm, umfassend Anweisungen, die, wenn sie von mindestens einem Prozessor ausgeführt werden, den mindestens einen Prozessor veranlassen, das Verfahren nach einem der Ansprüche 1 bis 6 durchzuführen.

11. Träger, umfassend ein Computerprogramm nach Anspruch 10, wobei der Träger eines von einem elektronischen Signal, einem optischen Signal, einem Funksignal oder einem computerlesbaren Speichermedium ist.

## Revendications

1. Procédé de prise en charge d'une signalisation basée sur la charge mis en oeuvre par un noeud de réseau dans un réseau de communication, le procédé comprenant :
- la détermination (202), sur la base d'une charge actuelle du noeud de réseau, d'un niveau de charge parmi un ensemble de niveaux de charge prédéfinis, chaque niveau de charge correspondant à une capacité estimée du noeud de réseau à traiter une signalisation provenant d'au moins un noeud de commande de réseau ; et
- l'indication (203) du niveau de charge déterminé à au moins un noeud de commande de réseau, dans lequel l'indication est mise en oeuvre lorsque le niveau de charge déterminé diffère d'un niveau de charge précédemment déterminé, et dans lequel l'indication du niveau de charge déterminé comprend la transmission du niveau de charge déterminé dans un message vers le noeud de commande de réseau.

2. Procédé selon la revendication 1, dans lequel chaque niveau de charge de l'ensemble de niveaux de charge prédéfinis correspond à un schéma de traitement de signal respectif, dans lequel le schéma de traitement de signal comprend un ensemble de règles concernant les signaux qui doivent être envoyés au noeud de réseau et le moment où de tels signaux doivent être envoyés au noeud de réseau.

3. Procédé selon la revendication 2, dans lequel au moins un schéma de traitement de signal implique des restrictions sur les signaux qui doivent être transmis au noeud de réseau.

4. Procédé selon l'une quelconque des revendications 2 ou 3, dans lequel au moins un schéma de traitement de signal implique qu'au moins certains signaux associés à la radiomessagerie ne doivent pas être transmis au noeud de réseau.

5. Procédé selon l'une quelconque des revendications 2 à 4, dans lequel au moins un schéma de traitement de signal implique qu'au moins certains signaux associés à la mobilité ne doivent pas être transmis au noeud de réseau.

6. Procédé selon l'une quelconque des revendications précédentes, dans lequel le niveau de charge est déterminé sur la base d'un ou plusieurs parmi :
- une charge d'UC ;
- un niveau de ressources utilisées
- un nombre de demandes rejetées ;
- un état de tampons ;
- un nombre de dispositifs sans fil desservis.

7. Noeud de réseau exploitable dans un réseau de communication, le noeud de réseau étant configuré pour :
- déterminer, sur la base d'une charge actuelle du noeud de réseau, un niveau de charge parmi un ensemble de niveaux de charge prédéfinis, chaque niveau de charge correspondant à une capacité estimée du noeud de réseau à traiter une signalisation provenant d'au moins un noeud de commande de réseau ; et pour indiquer le niveau de charge déterminé à au moins un noeud de commande de réseau, dans lequel le niveau de charge déterminé est indiqué lorsque le niveau de charge déterminé diffère d'un niveau de charge précédemment déterminé, et dans lequel le niveau de charge déterminé est indiqué par la transmission du niveau de charge déterminé dans un message vers le noeud de commande de réseau.

8. Noeud de réseau selon la revendication 7, dans lequel chaque niveau de charge de l'ensemble de niveaux de charge prédéfinis correspond à un schéma de traitement de signal respectif, dans lequel le schéma de traitement de signal est un ensemble de règles concernant les signaux qui et le moment où de tels signaux doivent être envoyés au noeud de réseau.

9. Noeud de réseau selon la revendication 8, dans lequel au moins un schéma de traitement de signal implique des restrictions sur les signaux qui doivent être transmis au noeud de réseau.

10. Programme informatique, comprenant des instructions qui, lorsqu'elles sont exécutées sur au moins un processeur, amènent l'au moins un processeur à effectuer le procédé selon l'une quelconque des revendications 1 à 6.

11. Porteuse comprenant un programme informatique selon la revendication 10, dans lequel la porteuse est l'un parmi un signal électronique, un signal optique, un signal radio ou un support de stockage lisible par ordinateur.
